# EUROPEAN PATENT APPLICATION

(11) **EP 4 763 312 A1**
(43) Date of publication of application: **24.06.2026**
(21) Application number: 24222242.0
(22) Date of filing: 20.12.2024
(51) Int. Cl.: B01D 53/14

(54) **APPARATUS FOR CO2 DESORPTION FROM A SOLVENT**

(71) Applicant: WinGD Ltd., 8400 Winterthur (CH)
(72) Inventor: Schmid, Andreas, 4247 Grindel (CH); Plüss, Alain, 8404 Winterthur (CH); Kallieros, Anastasios, 8051 Zürich (CH)
(74) Representative: Hartig, Michael

(57) **Abstract**

An apparatus configured for CO₂ desorption from a solvent, wherein the solvent is capable of reversibly absorbing and desorbing CO₂ from an exhaust gas of a large engine, the apparatus comprising: a desorption container configured to receive a CO₂ comprising solvent, wherein the desorption container is configured to evaporate a CO₂ comprising fluid from the CO₂ comprising solvent in the container in a desorption process such that a non-CO₂ comprising solvent is generated, and a low-pressure source in a fluid connection with the desorption container, configured such that a low-pressure generated by the low-pressure source enhances the evaporation of the CO₂ comprising fluid from the CO₂ comprising solvent in the desorption container.

## Description

### Technical field

The present invention is related to the field of chemical absorption carbon capture systems. Specifically, it relates to an apparatus, a system, and a method for CO₂ desorption from a solvent capable of reversibly absorbing and desorbing CO₂ from an exhaust gas of a large engine. Further, it relates to a propulsion system for a marine vessel comprising such a system.

### Background

Large engines, which can be configured as two-stroke or four-stroke engines, for example, as longitudinally scavenged two-stroke large engines or two-stroke cross-head engines, are often used as drive units for ships, particularly large ships and vessels for the transport of goods, or in stationary operations such as driving large generators for generating electrical energy. The engines usually run for considerable periods in continuous operation, which places high demands on operational safety and availability. As a consequence, particularly long maintenance intervals, low wear, and economical handling of the operating materials are central criteria for the operator. Large engines typically have cylinders with an inner diameter (bore) of at least 200 mm. Nowadays, large engines with a bore of up to 980 mm or even more are used. Within the framework of this application, the term "large engine" designates an internal combustion engine with a bore of the cylinder(s) that is at least 200 mm and preferably at least 300 mm. Engine speed is preferably below 800 RPM, especially for four-stroke engines, and more preferably below 200 RPM for two-stroke engines, which indicates the designation of low-speed engines.

Large engines are classically configured as large diesel engines, which are operated with heavy fuel oil. The engine can be a diesel or a gas engine, a dual-fuel or a multi-fuel engine. Under the aspects of economic and efficient operation, compliance with exhaust-gas limit values, sustainability, reduction of CO₂ emissions, and the availability of resources, alternatives to heavy fuel oil are now also being sought for large engines. In this respect, both liquid fuels, i.e., fuels that are introduced into the combustion chamber in the liquid state, and gaseous fuels, i.e., fuels that are introduced into the combustion chamber in the gaseous state, are used.

Examples of liquid fuels as known alternatives to heavy fuel oil are other heavy hydrocarbons, which are particularly left over as residues from oil refining; alcohols, in particular methanol or ethanol; ammonia; gasoline; diesel; or also emulsions or suspensions such as slurries.

Biological fuels, such as oil made from algae or seaweed, HVO (hydro-treated vegetable oil), and FAME (fatty acid methyl ester) based fuels are also possible. For example, it is known to use emulsions known as MSAR (Multiphase Superfine Atomized Residue) as fuel. As gaseous fuels, natural gases such as LNG (liquefied natural gas), liquefied gases such as LPG (liquefied petroleum gas), natural gas (NG), petrol gas (PG), ethane, or hydrogen are known. Further possible fuels comprise LBG (liquefied biogas), hydrogen, ammonia, and synthetic fuels from CO₂ (e.g., made by Power-To-Gas or Power-To-Liquid processes).

In particular, large engines are also known which can be operated with at least two or even more different fuels, whereby the engine is operated either with one fuel or with the other fuel depending on the operating situation or environment. It is also known to concurrently inject the two different fuels into the combustion chamber of the cylinder.

Large engines that can be operated with two or more different fuels are referred to as dual-fuel or multi-fuel large engines. Depending on the fuels, these engines may be operated in a liquid mode, in which a liquid fuel is introduced into the cylinder for combustion, and/or in a gas mode, in which a gas is introduced into the cylinder as fuel.

Large engines, which can be operated with at least two or even more different liquid or gaseous fuels, are often operated in different operating modes depending on the fuel currently in use. In the operating mode often referred to as diesel operation, the combustion of the fuel generally takes place according to the principle of compression ignition or self-ignition of the fuel. In the mode often referred to as Otto operation, combustion takes place by induced ignition. This induced ignition can take place, for example, by an electrical spark (e.g., with a spark plug) or by the self-ignition of a small injected amount of fuel (pilot fuel), which then causes the induced ignition of another fuel. The small amount of fuel intended for self-ignition is directly inserted into the combustion chamber or injected into a pre-chamber connected to the combustion chamber. Forced ignition can thus be achieved by use of a pre-chamber, a spark plug, and/or a pilot fuel. The process of induced ignition by self-ignition of a small amount of a liquid or another self-igniting fuel is sometimes referred to as pilot injection.

Furthermore, mixed forms using both Otto and diesel operation are also known.

In particular, in view of attempts to reduce greenhouse gas emissions, the reduction of CO₂ production, and sustainability goals, a reduction in the use of fossil fuels is strived for. Thus, alternatives are investigated to at least reduce or even completely avoid the use of fossil fuels in large engines. Even if this is still a long way off, a partial replacement of fossil fuels by renewable fuels is considered a significant success.

One alternative to fossil fuel is, for example, methanol or ammonia. However, such renewable fuels can cause corrosion problems in the fuel distribution and injection system, in particular during standstill of the engine, when the stagnant methanol can corrosively attack the pipes or other components of the fuel injection system. Furthermore, there is the risk that these fuels escape from the engine, e.g., as vapor, into the space which is accessible to engine maintenance or operating personnel. This constitutes a health hazard requiring comprehensive mitigation measures.

The escaping of gaseous fuel into the atmosphere are usually referred to as fuel slip or fugitive emissions. When methanol or ammonia is used as a fuel in a large engine, most of the methanol or ammonia is consumed in the combustion process. However, some of the fuel remains unburned and may escape into the atmosphere, e.g., by passing through the exhaust gas system of the large engine (fuel slip). All upstream losses are summarized as fugitive emissions.. Methanol or ammonia is hazardous for the environment as well as for humans and animals. Therefore, great efforts are made to reduce the fuel slip occurring in large engines, such as those used for ship propulsion.

Use of fossil fuels and other alternative fuels in large engines contribute greatly to greenhouse gases and to the existing climate crisis. In attempts to reduce greenhouse gas emissions, reducing CO₂ emissions in exhaust gases of power plants and industries or other sources in the environment are of utmost importance. Absorption of CO₂ using a suitable solvent is one of the most prevalent and popular methods of carbon capture practised today. Physical or chemical (or a combination of both) solvents for absorption of CO₂ can be adapted according to the requirements, where both the methods have advantages and disadvantages over the other. Chemical method of carbon capture is more widely practiced where the thermodynamic conditions do not favour a physical absorption process, wherein the chemical solvent has higher CO₂ absorption and desorption potential.

On-board chemical absorption carbon capture requires CO₂ desorption to regenerate the solvent in order to enable a cyclic, sustainable operation. This usually involves high energy demands. The process can be briefly described as follows: a suitable chemical solvent is introduced into an absorption unit, where it only reacts and dissolves CO₂ from an exhaust gas, to form a temporary weak chemical structure while not reacting with any other gases. This (CO₂) rich solvent can be regenerated by heating it to release the trapped CO₂ molecule and thereby regenerating the (CO₂) lean solvent that can then be used again for CO₂ absorption.

Hence, the rich solvent from the absorption unit is then transferred to a desorption unit where it is stripped off the absorbed CO₂ and the regenerated solvent is recycled and reused for the absorption process in the absorption unit. Although absorption of CO₂ raises the temperature of this solvent, it needs to be further heated to a temperature of ~120-130°C. An external heating source or a reboiler is used to heat the solvent in the desorption unit. The regenerated (CO₂ stripped) lean solvent is then recirculated and reused in the absorption unit. Whereas the desorbed CO₂ is cooled and compressed to liquify and are stored in suitable containers.

The desorption unit may utilize the steam generated by exhaust gas to heat up the rich solvent. In large engines, the steam quality (temperatures and pressures) from the exhaust gas is not always optimum for raising the temperature of the solvent up to ~120-130 °C. While such temperatures might be achieved when the engine is working at its full load capacity, at partial engine loads, the waste heat is insufficient in quantity and/or quality to raise the temperature of the solvent to enable a sufficient CO₂ desorption process. Thus, other, e.g. fuel intensive (combustion) form for generating required desorption heat is usually used.

Besides, heating the solvent to higher temperatures may lead to corrosion and quality degradation of the solvent, thereby affecting its CO₂-absorption capabilities. Therefore, it is important to find improved methods for desorption of CO₂ from the solvent.

### Disclosure of the invention

On-board chemical absorption carbon capture is an energy intense yet very crucial process to curb CO₂ concentration in the atmosphere. Presently known methods of on-board chemical absorption carbon capture from the exhaust gas of large engines involve a number of steps leading up to absorption and desorption of CO₂ from a solvent. The known methods involve several challenges which will be addressed herein. It is an objective of the present invention to at least in part overcome the drawbacks of the prior art solutions and in particular to provide an apparatus, a system, a method, and a propulsion system for a marine vessel, which enable a more efficient and/or widely applicable CO₂ capturing process.

According to a first aspect of the invention, this objective is achieved by an apparatus configured for CO₂ desorption from a solvent. The solvent is capable of reversibly absorbing and desorbing CO₂ from an exhaust gas of an large engine. The large engine can be a longitudinally scavenged two-stroke engine with at least one cylinder having an inner diameter of at least 200 mm. The apparatus comprises a desorption container which is configured to receive a CO₂ comprising solvent. This CO₂ comprising solvent is also called "rich solvent" herein, denoting that the solvent is "loaded" with CO₂ from the exhaust gas. The desorption container is configured to evaporate a CO₂ comprising fluid from the CO₂ comprising solvent in the container in a desorption process. Thus, the solvent can be regenerated and by means of the evaporation of the CO2 comprising fluid from the CO2 comprising solvent, a non-CO2 comprising solvent can be generated which can be reused in the apparatus. The non-CO₂ comprising solvent is also called "lean solvent" herein, denoting that the solvent is "available" for loading with CO₂ from the exhaust gas. It should be noted that the term "non-CO₂ comprising solvent" does not necessarily mean that no CO₂ is present at all, but only that the solvent has capacity to be loaded with CO₂ from the exhaust gas.

Further, according to the invention, the apparatus comprises a low-pressure source in a fluid connection with the desorption container which is configured in such a way that the low-pressure (e.g. in the range of -550 mbar to -300 mbar) generated by the low-pressure source enhances the evaporation of the CO₂ comprising fluid from the solvent in the desorption container. Herein, the term "enhances" comprises an improved CO₂ desorption process from the solvent (e.g. faster, more efficient, with more yield) as well as a CO₂ desorption process at conditions at which normally a CO₂ desorption would not be reasonably possible (e.g. at a temperature in the range of 70-100°C instead of 120-130°C without the reduced pressure). This enables the desorption and therefore a CO₂ separation from the exhaust gas of the large engine at a wider range of operating conditions such as a lower engine load where, e.g. not enough waste heat is available for CO₂ desorption without burning additional fuel for the desorption process. This leads to an overall increased CO₂ separation potential which has a beneficial impact on the greenhouse gas footprint.

According to an embodiment, the solvent is configured or selected such that it can absorb the CO₂ from the exhaust gas in an exothermic reaction (absorption process) and that it can desorb the CO₂ in an endothermic reaction (desorption process). Thus, the absorption and desorption processes enable cyclic CO₂ absorption from the exhaust gas and CO₂ desorption from the solvent. The solvent can thus be circulated in a closed circuit which leads to improved handling and can also be used to exchange heat between different stages of the solvent circulation, without additional energy expenditure. In addition, this also helps in maintenance of the whole system and enables cyclic operation.

Advantageously, the solvent is selected from a group consisting of Monoethanolamin (MEA), Diethanolamine (DEA), Methyldiethanolamine (MDEA), Piperazine (PZ), 2-Amino-2-methyl-1-propanol (AMP), Potassium Carbonate and any of its promoted blends, Diglycolamine (DGA), Functionalized Ionic Liquids, Organic Solvents such as N-Methyl-2-pyrrolidone (NMP), Aqueous Ammonia, Sterically Hindered Amines such as 2-Amino-2-methylpropanol, Aminosilicones, Amine-Functionalized Polymers, and Solid Sorbents such as Metal-Organic Frameworks (MOFs), Zeolites or Activated Carbon, Amine-functionalized silica or alumina. A combination of two or more substances is possible as well.

According to an embodiment, for enabling a cyclic operation of the apparatus, the lean (regenerated) solvent obtained after desorption of CO₂ in the desorption container, can be circulated back to an absorption container for reutilization of its CO₂ absorbing properties. The absorption container is configured to receive the exhaust gas comprising CO₂ from the large engine and a non-CO₂ comprising (lean) solvent, wherein the lean solvent absorbs at least a part of the CO₂ from the exhaust gas, thereby producing CO₂ comprising 'rich' solvent and exhaust gas having a reduced CO₂ content. The CO₂ comprising 'rich' solvent can be supplied to the apparatus of the invention for CO₂ desorption.

According to another embodiment, the low-pressure source comprises a compressor that is connected to the desorption container, e.g., via a tube or a piping, in such a way that the low-pressure is generated in the desorption container. This leads to an improved desorption process and solvent regeneration.

According to an embodiment, the compressor connected to the desorption container is driven by exhaust gas of the large engine. This can be achieved by directing at least a (adjustable) part of the exhaust gas through a turbine connected to the compressor, which in turn drives the compressor. The compressor can be driven by a turbine of the main turbocharger of the large engine that is also used for charging the large engine. Then, the compressor can be coaxially connected to the main turbocharger.

Alternatively, the low-pressure source can comprise a secondary or an auxiliary turbine connected to the desorption container, which is not used to drive the main turbocharger for charging the large engine and is separate from the main turbocharger of the large engine. Then, only a part of the exhaust gas from the large engine is used to drive the auxiliary turbine. Other possibilities for driving the compressor include an electric motor powered, e.g. by on-board electrical grids, a mechanical power take-off from the large engine, and a hydraulic system of the large engine.

According to an embodiment, the low-pressure source comprises a valve having a first inlet for the evaporated CO₂ comprising fluid and a second inlet for a second fluid, wherein the second fluid comprises a motive gas or a liquid stream. The second inlet comprises a nozzle to accelerate the second fluid. An outlet of the valve combines the evaporated CO₂ comprising fluid and the second fluid such that a low-pressure of, e.g. around 0.5-0.7 bars is generated in the evaporated CO₂ comprising fluid and therefore in the desorption container.

According to an embodiment, the first inlet of the valve at least partially encircles the second inlet and the outlet comprises a diffuser. This leads to improved flow conditions.

According to an embodiment, the apparatus comprises a heat source configured to heat the solvent in the desorption container for evaporating the CO₂ comprising fluid from the solvent. In an embodiment, the heat source comprises a heat pump for heating the solvent. In an embodiment, the solvent in the desorption container may be heated using an external heater, e.g. a combustion based heater, or a reboiler.

In a further embodiment, a cooler is connected to the desorption container and is configured to cool the evaporated CO₂ comprising fluid and in particular configured to condense and separate evaporated water and solvent remains included in the evaporated CO₂ comprising fluid. By means of the cooler, condensed solvent can be returned to the absorption container for re-circulation while the resulting CO₂ comprising fluid can be further processed to extract purified or substantially pure CO₂, which can be cooled and compressed to liquify and can be stored in a container under pressure for transportation to the destination harbor.

According to a second aspect of the invention, a system for separating CO₂ from an exhaust gas of a large engine, in particular configured for use on board of a marine vessel, comprises an absorption container configured to receive the exhaust gas comprising CO₂ from the large engine and a non-CO2 comprising solvent or lean solvent. The non-CO2 comprising solvent absorbs at least a part of the CO₂ from the exhaust gas, thereby producing CO₂ comprising solvent and exhaust gas having a reduced CO₂ content. Further, the system comprises an apparatus according to the invention as described above with regard to the first aspect. Furthermore, the absorption container is connected to the apparatus by a first line configured to transfer the CO₂ comprising solvent to the apparatus. With the system of the invention, the desorption of CO₂ from the solvent can be achieved at lower pressure and lower temperature conditions inside the desorption container. In particular, the temperature can be lower than 120-130 °C, which temperature is typically used for CO₂ desorption. This leads to an overall increased CO₂ capturing yield as a higher amount of CO₂ can be captured in times of lower engine loads which would - without the invention - not provide enough waste heat for CO2 desorption/capturing.

Typically, the exhaust gas from large engines contains various components such as soot, particulate matter (PM), sulfur oxides (SOx), nitrogen oxides (NOx), and other gases besides carbon dioxide (CO₂). These additional gases should be initially removed from the exhaust gas stream before initiating the carbon capture process in the system described herein. This step can be crucial to avoid degradation of the solvent and to maximize its CO₂ absorption potential.

After the optional initial exhaust gas cleaning step, the cleaned exhaust gas stream can be introduced into a Direct Contact Cooler (DCC) to lower its temperature to, e.g. 40°C. This cooling step thermodynamically favors the absorption of CO₂ by the solvent. The cleaned and cooled exhaust gas stream can then be introduced into the absorption container. In the absorption container, under favorable thermodynamic conditions, a countercurrent flow of the CO₂ and the lean solvent may be arranged which leads to the absorption of CO₂ by the solvent. The CO₂-rich solvent from the absorption container may then be transferred to the desorption container through the first transfer line.

According to an embodiment the system further comprises a second line connecting the apparatus with the absorption container, the second line being configured to transfer the solvent from the apparatus back to the absorption container. Furthermore, the system may comprise a heat exchanger arranged for transferring heat from the solvent in the second line to the solvent in the first line. This helps to save energy.

The first and second transfer lines between the absorption and desorption containers may form part of the heat exchanger. In the heat exchanger, heat from the lean solvent in the second line is transferred to the CO₂-rich solvent in the first line, thereby raising the temperature of the rich solvent entering the desorption container and lowering the temperature of the lean solvent from the apparatus.

According to an embodiment the system comprises means for intermediate storage of heat from the engine, wherein the means for intermediate storage of heat is connected to the desorption container to provide heat to the CO₂ comprising solvent received therein. The heat storage means may be used for storing heat from exhaust gas of the large engine operation at higher loads. In particular, the means for intermediate heat storage comprise a latent heat storage material that undergoes a phase-change in the relevant temperature range. This helps to increase the operational efficiency.

According to a third aspect of the invention, a method for on-board chemical absorption carbon capture and desorption of CO₂ from a solvent is provided. The method involves supplying CO₂-rich solvent to the desorption container, applying low pressure to the solvent, and evaporating the CO₂-rich fluid under low pressure conditions to generate non-CO2 comprising solvent. According to the method a desorption of CO₂ from the solvent can be achieved at lower pressure and lower temperature conditions which can help to increase the overall CO₂ capturing capabilities.

According to an embodiment, the method comprises a further step of supplying non-CO₂ comprising solvent or lean solvent and the exhaust gas to an absorption container, wherein the non-CO₂ comprising solvent absorbs at least a part of the CO₂ from the exhaust gas, thereby producing CO₂ comprising solvent and exhaust gas having a reduced content of CO₂. The absorption process may by conducted in a countercurrent arrangement of the non-CO₂ comprising solvent and the exhaust gas streams.

According to an embodiment, the method further includes heating the CO₂ comprising solvent in the desorption container to a temperature within a range of, e.g. 70-100°C for the desorption process and/or decreasing the pressure inside the desorption container to a range of, e.g. 0.45 - 0.7 bars to facilitate or enhance the desorption process. A low-pressure source, such as a compressor or a vacuum pump or an auxiliary turbine, can be connected to the desorption container to enhance the evaporation of the CO₂-rich fluid from the solvent.

When the heat exchange between the lean and rich solvents is not sufficient to raise the temperature of the solvent inside the desorption container to enable CO₂ evaporation conditions, an intermediate storage of heat from the engine can be connected to the desorption container to provide additional heat to the CO₂-rich solvent received therein.

According to an embodiment, the method comprises a further step of cooling the evaporated CO₂ comprising fluid (e.g. by means of a cooler connected to the desorption container a step of condensing and separating evaporated water and solvent remains included in the evaporated CO₂ comprising fluid, and a further step of compressing resulting CO₂ to liquify the CO₂ from the evaporated CO₂ comprising fluid for further storage and/or treatment.

As a fourth aspect of the invention, a propulsion system for a marine vessel includes a large engine and a system for separating CO₂ from the exhaust gas of the large engine, configured as described above. The method and apparatus described herein can be used in a longitudinally scavenged two-stroke engine with at least one cylinder having an inner diameter of at least 200 mm. Thus, the CO₂ content of the large engine can be considerably reduced which is beneficial for protection of our climate.

### Brief Description of the Drawings

The invention will be better understood and objects other than those set forth above will become apparent when consideration is given to the following detailed description thereof. Such description refers to the annexed drawings, wherein:
- FIG. 1: illustrates a system comprising a CO₂ absorption container and a corresponding desorption container in accordance with an embodiment of the present invention;
- FIG. 2: illustrates an embodiment of a low pressure source in accordance with a further embodiment of the present invention, to generate a low-pressure inside the desorption container; and
- FIG. 3: shows a schematic representation of an embodiment of a large engine.

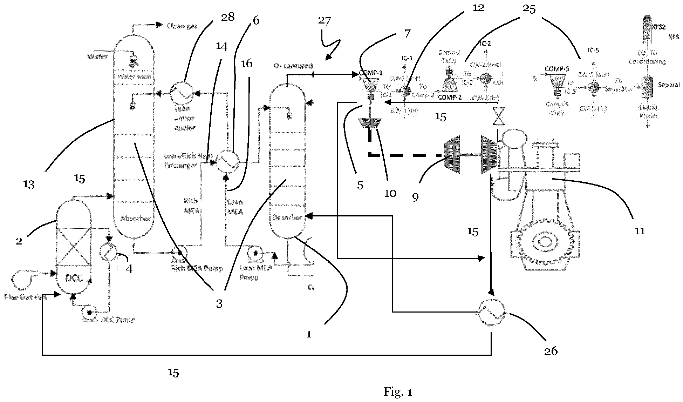

Figure 1 shows an on-board chemical absorption carbon capture system for use on board of a marine vessel according to an embodiment of the present invention.

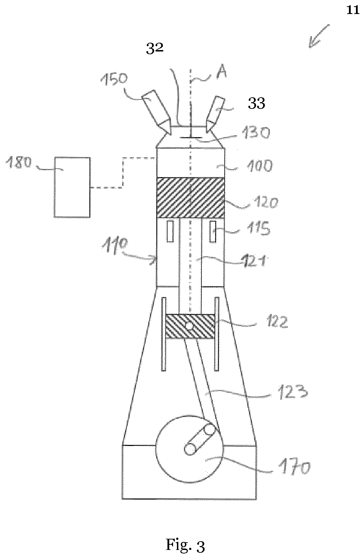

The system comprises an apparatus 27 configured for CO₂ desorption from a solvent 3 supplied to a desorption container 1 of the apparatus 27. Preferably, the solvent 3 is capable of reversibly absorbing and desorbing CO₂ from an exhaust gas 15 of a large engine 11 of the vessel. An example of the large engine 11 is shown in more detail in Fig. 3.

The system comprises a Direct Contact Cooler (DCC) unit 2 which is configured to receive filtered exhaust gas 15 from the large engine 11 through a heat exchanger 26 to reduce its temperature. The exhaust gas 15 includes CO₂ and its temperature is further reduced to around 40°C by a cooler 4 of the DCC unit 2 to enhance absorption of CO₂ from the exhaust gas by the solvent 3.

To carry out the absorption process the cooled exhaust gas 15 comprising CO₂ is supplied from the DCC unit 2 to the absorption container 13 and a non-CO₂ comprising or lean solvent 3 is also supplied to the absorption container 13 at an upper portion thereof after a cooling process in a cooler 28. In the absorption container 13 the non-CO₂ comprising solvent 3 absorbs at least a part of the CO₂ from the exhaust gas 15 in a countercurrent process, thereby producing CO₂ comprising or rich solvent 3. This absorption process reduces the amount of CO₂ in the exhaust gas 15. The absorption of CO₂ by the lean solvent 3 is an exothermic reaction resulting in a temperature increase of the CO₂ rich solvent. The purified and CO₂ depleted exhaust gas 15 is exhausted from the absorption container 13 through an outlet provided at the top ("clean gas"). Before reaching the outlet, the exhaust gas 15 is further cleaned in a water wash effected by spraying water inside the absorption container 1 at a top portion thereof as is visible in Fig. 1. This is done in order to reduce the emissions of volatile compounds into the atmosphere.

The absorption container 13 is connected to the desorption container 1 by a first transfer line 14 configured to transfer the CO₂ comprising solvent 3 to the desorption container 1.

The desorption container 1 is configured to receive the CO₂ comprising solvent 3 and to evaporate a CO₂ comprising fluid from the CO₂ comprising solvent 3 in the container 1 in a desorption process such that non-CO₂ comprising solvent 3 or lean solvent is generated.

The non-CO2 comprising solvent from the desorption container 1 is transferred back to the absorption container 13 via a second transfer line 16. The first and second transfer lines 14, 16 are connected to a common heat exchanger 6 so that lean solvent 3 from the desorption container 1 is cooled and rich solvent from the absorption container 13 is heated.

A low-pressure source 5 in a fluid connection with the desorption container 1 is configured such that the low-pressure generated by the low-pressure source 5 enhances the evaporation of the CO₂ comprising fluid from the rich solvent 3 in the desorption container 1.

In the embodiment shown in figure 1, the low-pressure source 5 comprises a compressor 7 that is connected to the desorption container 1 in such a way that the low-pressure is generated in the desorption container 1. The compressor 7 may be connected to desorption container 1 by a pipe that is mounted to a top part of the desorption container 1. Various means can be used to drive the compressor 7.

According to the given embodiment shown in Fig. 1, the compressor 7 is driven by exhaust gas 15 of the large engine 11, wherein at least a part of the exhaust gas 15 is directed through an auxiliary turbine 10 connected to the compressor 7 and thereby drives the compressor 7. After passing through the auxiliary turbine 10 the exhaust gas 15 is recombined with the mainstream of exhaust gas 15 from the large engine 11 and subsequently directed through the heat exchanger 26.

According to an alternative, as shown in figure 1 by the dashed line, a main turbocharger 9 of the large engine 11 that is also used for charging the large engine 11 is, for example, mechanically connected to the compressor 7 and the compressor 7 is driven by the main turbocharger 9.

Figure 1 further shows a cooler 12 connected to the desorption container 1 downstream the compressor 7 which is configured to cool the evaporated CO₂ comprising fluid and configured to condense and separate evaporated water and solvent 3 remains included in the evaporated CO₂ comprising fluid. The separated CO₂ is then further processed, purified and compressed to liquify and store in one or more appropriate containers. For this purpose, additional compressor and cooling stages 25 are provided downstream the cooler 12. The solvent 3 is reintroduced into the desorption container 1 after the removal of CO₂.

To enhance the desorption process of the CO₂ comprising fluid from the desorption container 1, the heat recovered from the exhaust gas 15 by the heat exchanger 26 is used for heating the desorption container 1. However, the amount of heat provided to the desorption container 1 depends on the temperature of the exhaust gas 15 of the large engine 11. The temperature of the exhaust gas 15 can, e.g. only be sufficient to heat the rich solvent 3 in the desorption container 1 to a temperature of 120-130°C in the desorption container 1 that is sufficient for the evaporation of a significant amount of CO₂ comprising fluid if the large engine runs at its full load capacity. In contrast, the evaporation of the CO₂ comprising fluid will not be sufficient to desorb a significant amount of CO₂ in situations where the large engine 11 runs at low loads, e.g. at 50% load or less. According to the present invention, the evaporation rate of the CO₂ comprising fluid is enhanced by generating low pressure with the low-pressure source 5 connected to the desorption container 1. Preferably, the evaporation rate of the CO₂ comprising fluid at lower solvent temperatures in the range of 70-100°C is thus enhanced, e.g. to an amount comparable to evaporation conditions when the large engine 11 is running at its full capacity.

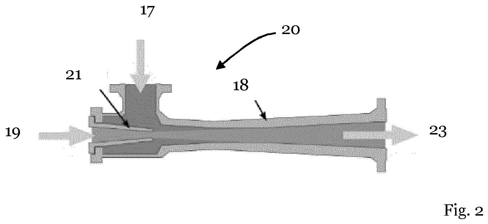

Figure 2 illustrates an alternative low-pressure source 5. This low-pressure source may replace or supplement the compressor 7 shown in Fig. 1 and can be connected to the desorption container to generate a low-pressure inside the desorption container 1. This low-pressure source 5 comprises a valve 20 having a first inlet 17 for the evaporated CO₂ comprising fluid from the desorption container 1 and a second inlet 19 for a second fluid. The first inlet 17 of the valve 20 at least partially encircles the second inlet 19. Furthermore, the outlet 23 comprises a diffuser 18. The second inlet 19 comprises a nozzle 21 which accelerates the second fluid. The outlet 23 of the valve 20 combines the evaporated CO₂ comprising fluid and the accelerated second fluid such that in combination with the diffuser 23 a low-pressure is generated in the evaporated CO₂ comprising fluid the desorption container 1 so that the amount of evaporated CO2 comprising fluid is increased even at lower temperatures in the range of 70-100°C of the solvent in the desorption container 1 instead of 120-130°C of the solvent 3 which can be achieved under conditions of the large engine 11 running at its full capacity.

Fig. 3 shows a schematic representation of an embodiment of a large engine 11 in cross-section. In Fig. 3, only one of the cylinders 110 of the large engine 11 is shown. Usually, the large engine 11 comprises a plurality of cylinders 110, for example at least four and up to twelve cylinders 110 or even more. The term "large engine" refers to internal combustion engines that are typically used as drive units for ships or in stationary operations, such as driving large generators for generating electrical energy. Typically, the cylinders 110 of a large engine 11 each have an inner diameter (bore) of at least about 200 mm. Large engines 11 are known in various configurations, for example as two-stroke engines or four-stroke engines.

In the following description, reference is made by way of example to a large engine 11 configured as a longitudinally scavenged two-stroke large engine having a plurality of cylinders 110. Each cylinder 110 has a combustion chamber 100. Furthermore, in each cylinder 110, a piston 120 is arranged for reciprocating movement between a top dead center and a bottom dead center.

The term "longitudinally scavenged" means that the scavenging or charging air is introduced into the cylinder 110 in the area of the lower end, and an exhaust valve 130 is arranged in or at the cylinder cover 32 located at the upper end of the cylinder 110.

In particular, reference is made to a large longitudinally scavenged two-stroke engine that can be operated with different fuels, namely with a first fuel and with a second fuel. Preferably, the large engine 11 is configured as a large diesel engine. The term "large diesel engine" refers to engines that can be operated at least in diesel operation. In particular, the term "large diesel engine" also comprises large engines 11 that can be operated in another mode, e.g., Otto operation, in addition to diesel operation.

According to a preferred configuration, the large engine 11 can be operated with methanol or ammonia as a first fuel and with a self-igniting and liquid second fuel. For this, the large engine 11 comprises a first fuel supply system and a second fuel supply system. Usually, liquid fuel, such as heavy fuel oil (HFO), marine diesel oil (MDO), or marine gas oil (MGO), is injected directly into the combustion chamber 100 at a suitable time and ignites there according to the diesel principle of self-ignition. For injecting the second fuel into the combustion chamber 100, each cylinder comprises a second fuel injector 150, which is different from the first fuel injector 33. Thus, each cylinder 110 comprises at least one, but preferably a plurality of, first fuel injectors 33 for injecting the first fuel, as well as at least one, but preferably a plurality of, second fuel injectors 150 for injecting the second fuel.

The first fuel, which is injected with the fuel injector 33 into the combustion chamber 100, is, for example, a fuel for Otto operation, i.e., with induced ignition of the fuel. The first fuel can be injected into the combustion chamber 100 where it is ignited according to the Otto principle. This induced ignition is usually caused by introducing a small amount of self-igniting second fuel (e.g., diesel or heavy fuel oil) into the combustion chamber 100 or into a pre-chamber at a suitable moment, which second fuel then ignites itself and causes the induced ignition of the first fuel in the combustion chamber 100.

Introducing a small amount of a self-igniting liquid second fuel into the combustion chamber 100 or into at least one pre-chamber for the induced ignition of the first fuel is also referred to as pilot ignition. Beside a diesel oil it is also possible to use a gas or an alcohol such as methanol as pilot fluid for the pilot ignition.

In other embodiments, the induced ignition is achieved by way of spark ignition, laser pulse, or any other means suited for igniting the fuel in the combustion chamber 100.

In the following description, reference is made to a preferred embodiment in which the first fuel is methanol or ammonia, and the second fuel is a diesel fuel for self-ignition, for example HFO, MDO, or MGO. Regarding the first fuel, it is preferred that the operation with the first fuel is an operation according to the Otto principle.

Furthermore, the large diesel engine 11 can be operated in a mixed mode, in which both the first fuel and the second fuel are injected into the combustion chamber 100 of the cylinder 110. In the mixed mode, both the combustion of the first fuel and the combustion of the second fuel contribute to the generation of torque.

In the embodiment described here, the large engine is configured as a longitudinally scavenged dual-fuel two-stroke large diesel engine, which can be operated with methanol or ammonia as the first fuel and/or with a diesel fuel as the second fuel.

The dual-fuel large diesel engine has a plurality of cylinders 110. In each cylinder 110, the piston 120 is connected in a manner known per se to a crosshead 122 via a piston rod 121. The crosshead 122 is connected to a crankshaft 170 via a push rod or connecting rod 123, so that the movement of the piston 120 is transmitted via the piston rod 121, the crosshead 122, and the connecting rod 123 to the crankshaft 170 to rotate it. The upper side of the piston 120, together with the cylinder cover 2, delimits the combustion chamber 100 into which the first fuel and/or the second fuel is introduced.

The structure and individual components of a large diesel engine 11, such as the injection system for the fuels, the gas exchange system, the exhaust system, the turbocharger system for the supply of scavenging or charging air, as well as the monitoring and control system, are sufficiently known to those skilled in the art for both two-stroke and four-stroke engine designs and therefore need no further explanation here.

In the embodiment of a longitudinally scavenged two-stroke large diesel engine 11, scavenging air slots 115 are usually provided in the lower region of each cylinder 110 or cylinder liner. These slots are periodically closed and opened by the movement of the piston 120 in the cylinder 110, allowing the scavenging air provided by the main turbocharger 9 under charging pressure to flow into the cylinder 110 through the scavenging air slots 115 when they are open. In the cylinder cover 32, the usually centrally arranged exhaust valve 130 is provided, through which the exhaust gases can be discharged from the cylinder 110 into the exhaust system after the combustion process. The exhaust system guides at least a part of the exhaust gases to a turbine of the main turbocharger 9, whose compressor provides the scavenging air, also referred to as charging air, in a scavenge air receiver under scavenge air pressure. The scavenge air receiver is in fluid communication with the scavenging air slots 115 of the cylinders 110.

Each cylinder 110 comprises at least one first fuel injector 33 for injecting the first fuel into the combustion chamber 100 of the cylinder 110. Preferably, the cylinder 110 comprises a plurality of first fuel injectors 33, for example two or three first fuel injectors 33, for uniformly distributing the first fuel in the combustion chamber 100. In the embodiment of the large engine 11 described here, exactly three first fuel injectors 33 are provided (only one first fuel injector 33 is shown in the schematic representation of Fig. 3). Each first fuel injector 33 is arranged in the cylinder cover 32 of the cylinder 110. The cylinder cover 32 comprises an inner surface for delimiting the combustion chamber 100 and an injector bore extending through the cylinder cover 32 and opening into the inner surface. The injector bore is configured to receive the first fuel injector 33. Preferably, the first fuel injectors 33 are arranged in the cylinder cover 32 near the exhaust valve 130.

Each cylinder 110 further comprises at least one second fuel injector 150 for injecting the second fuel into the combustion chamber 100 of the cylinder 110. Preferably, the cylinder 110 comprises a plurality of second fuel injectors 150, for example two or three second fuel injectors 150, for uniformly distributing the second fuel in the combustion chamber 100. In the embodiment of the large engine 200 described here, exactly three second fuel injectors 150 are provided (only one second fuel injector 150 is shown in the schematic representation of Fig. 3). Each second fuel injector 150 is arranged in the cylinder cover 32 of the cylinder 110 in a manner known in the art. Preferably, the second fuel injectors 150 are arranged in the cylinder cover 32 near the exhaust valve 130.

Nowadays, a large diesel engine or a large engine 11 in general is operated in a fully electronically controlled manner. An engine control unit 180 operates and controls all functions of the large engine 11-for example, the operation of the exhaust valves 130 for the gas exchange, the injection process for the fuels, and the pilot injection timing (when pilot injection is required)-by way of electric or electronic signals and commands. In addition, the engine control unit 180 receives information from several detectors, sensors, or measuring devices.

It is noted that the invention is not restricted to this specific type of a longitudinally scavenged two-stroke large engine 11, which can be operated with the first fuel and/or with the second fuel. The large engine can also be any other type of large engine. In particular, it is possible that the large engine is configured for the combustion of only one fuel.

Any embodiments described with respect to the devices shall similarly pertain to the method. Synergetic effects may arise from different combinations of the embodiments although they might not be described in detail. While there are shown and described presently preferred embodiments of the invention, it is to be distinctly understood that the invention is not limited thereto but may be otherwise variously embodied and practiced within the scope of the following claims.

### Reference numerals:

1- desorption container
2- Direct Contact Cooler (DCC) unit
3- solvent
4- cooler of the DCC unit
5- low-pressure source
6- heat exchanger
7- compressor
9- main turbocharger
10- auxiliary turbocharger
11- large engine
12- cooler
13- absorption container
14- first line
15- exhaust gas
16- second line
17- first inlet
18- diffuser
19- second inlet
20-valve
21- nozzle
23- outlet
25- compressor and cooling stages
26- heat exchanger
27- desorption apparatus
32- cylinder cover
33- first fuel injector
100- combustion chamber
110- cylinder
115- scavenging air slots
120- piston
121- piston rod
122- crosshead
123- connecting rod
130- exhaust valve
150- second fuel injector
170- crankshaft
180- engine control unit

## Claims

1. An apparatus configured for CO₂ desorption from a solvent (3), wherein the solvent (3) is capable of reversibly absorbing and desorbing CO₂ from an exhaust gas of a large engine (11), the apparatus comprising:
- a desorption container (1) configured to receive a CO₂ comprising solvent (3), wherein the desorption container (1) is configured to evaporate a CO₂ comprising fluid from the CO₂ comprising solvent (3) in the container (1) in a desorption process such that a non-CO₂ comprising solvent (3) is generated, and
- a low-pressure source (5) in a fluid connection with the desorption container (1), configured such that a low-pressure generated by the low-pressure source (5) enhances the evaporation of the CO₂ comprising fluid from the CO₂ comprising solvent (3) in the desorption container (1).

2. The apparatus of claim 1 wherein the solvent (3) is configured to absorb CO₂ from the exhaust gas in an exothermic absorption process and wherein the solvent (3) is further configured to desorb CO₂ in an endothermic desorption process, such that the absorption and desorption processes enable a cyclic CO₂ absorption from the exhaust gas and CO₂ desorption from the solvent (3).

3. The apparatus of any one of the preceding claims, wherein the low-pressure source (5) comprises a compressor (7) that is connected to the desorption container (1) in such a way that the low-pressure is generated in the desorption container (1).

4. The apparatus of claim 3, wherein the compressor (7) is driven by exhaust gas of the large engine (11), wherein at least a part of the exhaust gas is directed through a turbine (9) connected to the compressor (7) and thereby drives the compressor (7), and in particular wherein the compressor (7) is driven by at least one of the group of
- a main turbocharger turbine of the large engine (11) that is also used to drive a main turbocharger for charging the large engine (11),
- an auxiliary turbine separate from a main turbocharger turbine of the large engine (11), which auxiliary turbine is not used to drive the main turbocharger, and wherein only a part of the exhaust gas from the large engine is used to drive the auxiliary turbine, and in particular wherein the part of the exhaust gas that drives the auxiliary turbine is adjustable, preferably based on an engine parameter such as an engine load,
- an electric motor,
- a mechanical power take-off from the large engine, and
- a hydraulic system of the large engine.

5. The apparatus of any one of the preceding claims, wherein the low-pressure source (5) comprises a valve (15) having a first inlet (17) for the evaporated CO2 comprising fluid and a second inlet (19) for a second fluid, wherein the second inlet (19) comprises a nozzle (21) to accelerate the second fluid, wherein an outlet (23) of the valve (15) combines the evaporated CO₂ comprising fluid and the second fluid such that the low-pressure is generated in the desorption container (1).

6. The apparatus of claim 5, wherein the first inlet (17) of the valve (15) at least partially encircles the second inlet (19) and wherein the outlet (23) comprises a diffuser (18).

7. The apparatus of any one of the preceding claims, comprising a heat source configured to heat the CO₂ comprising solvent (3) in the desorption container (1) for evaporating the CO₂ comprising fluid from the CO₂ comprising solvent (3),
and in particular wherein the heat source comprises a heat pump or a combustion-based heater.

8. The apparatus of any one of the preceding claims, comprising a cooler (12) connected to the desorption container (1) and configured to cool the evaporated CO₂ comprising fluid and in particular configured to condense and separate evaporated water and solvent (3) remains included in the evaporated CO₂ comprising fluid.

9. A system for separating CO₂ from an exhaust gas of a large engine (11), in particular configured for use on board of a marine vessel, the system comprising:
- an absorption container (13) configured to receive the exhaust gas (15) comprising CO₂ from the large engine (11) and a non-CO2 comprising solvent (3), wherein the non-CO2 comprising solvent (3) absorbs at least a part of the CO2 from the exhaust gas (15), thereby producing CO₂ comprising solvent (3) and exhaust gas having a reduced CO₂ content, and
- an apparatus of any one of the preceding claims for desorbing a CO₂ comprising fluid from the CO2 comprising solvent (3), thus regenerating the non-CO2 comprising solvent (3),
wherein the absorption container (13) is connected to the apparatus by a first line (14) configured to transfer the CO₂ comprising solvent (3) to the apparatus.

10. The system of claim 9, further comprising a second line (16) connecting the apparatus with the absorption container (13), the second line (16) being configured to transfer the non-CO₂ comprising solvent (3) from the apparatus back to the absorption container (13),
and in particular wherein the system further comprises a heat exchanger (6) for transferring heat from the non-CO2 comprising solvent in the second line (16) to the CO2 comprising solvent in the first line (14).

11. The system of any one of the claims 9 to 10, further comprising means for intermediate heat storage from the engine (11), wherein the means for intermediate heat storage is connected to the desorption container (1) to provide heat to the CO₂ comprising solvent (3) received therein, and in particular wherein the means for intermediate heat storage comprises a latent heat storage material that undergoes a phase-change.

12. A method for desorbing CO₂ from a solvent (3), wherein the solvent (3) is capable of reversibly absorbing CO2 from an exhaust gas of a large engine (11), thus generating a CO2 comprising solvent (3) and capable of desorbing a CO2 comprising fluid from the CO2 comprising solvent (3) to regenerate a non-CO2 comprising solvent (3), the method comprising steps of:
- supplying the CO₂ comprising solvent (3) to a desorption container (1);
- applying a low-pressure to the CO₂ comprising solvent (3) in the desorption container (1); and
- evaporating the CO₂ comprising fluid from the CO₂ comprising solvent (3) under the low-pressure in a desorption process and thereby regenerating the non-CO₂ comprising solvent (3),
wherein the low-pressure enhances the evaporation of the CO₂ comprising fluid from the CO₂ comprising solvent (3) in the desorption container (1).

13. The method of claim 12, comprising a further step of:
- supplying the non-CO2 comprising solvent (3) and the exhaust gas to an absorption container (13), wherein the non-CO2 comprising solvent (3) absorbs at least a part of the CO₂ from the exhaust gas, thereby producing the CO₂ comprising solvent (3) and exhaust gas having a reduced CO₂ content.

14. The method of any one of the claims 12 or 13, comprising a further step of:
- heating the CO₂ comprising solvent (3) in the desorption container (1) to a temperature within a range of 70-100°C for the desorption process and/or decreasing the pressure inside the desorption container (1) to a range of 0.45 - 0.7 bars.

15. The method of any one of the claims 12-14, comprising further steps of:
- cooling the evaporated CO₂ comprising fluid,
- condensing and separating evaporated water and solvent (3) remains included in the evaporated CO₂ comprising fluid, and
- compressing resulting CO₂ to liquify the CO₂ for further storage and/or treatment.

16. A propulsion system for a marine vessel comprising
- a large engine (11), in particular a longitudinally scavenged two-stroke engine with at least one cylinder having an inner diameter of at least 200 mm, and
- a system for separating CO₂ from an exhaust gas of the large engine (11) according to any one of the claims 9-11.
